# EUROPEAN PATENT APPLICATION

(11) **EP 4 734 103 A1**
(43) Date of publication of application: **29.04.2026**
(21) Application number: 24846024.8
(22) Date of filing: 24.07.2024
(51) Int. Cl.: G10L 15/22, G06F 3/16, G06F 40/279, G06F 16/903, G06F 3/04817, G10L 15/18

(54) **ELECTRONIC DEVICE AND METHOD FOR PROCESSING USER UTTERANCE**

(30) Priority: 26.07.2023 KR 20230097282; 25.08.2023 KR 20230111975
(71) Applicant: Samsung Electronics Co., Ltd., Suwon-si, Gyeonggi-do 16677 (KR)
(72) Inventor: PARK, Sangmin, Suwon-si Gyeonggi-do 16677 (KR); KIM, Kyungtae, Suwon-si Gyeonggi-do 16677 (KR); SONG, Gajin, Suwon-si Gyeonggi-do 16677 (KR)
(74) Representative: HGF
(86) International application number: PCT/KR2024/010672
(87) International publication number: WO 2025/023722

(57) **Abstract**

Disclosed are an electronic device and a method for processing a user utterance. An operation method of an electronic device (101, 201, 501) according to an embodiment may comprise an operation for outputting a first response (63) for a portion of a user utterance, in response to obtaining the portion. The method may comprise an operation for obtaining a user input (67) for the first response. The method may comprise an operation for outputting a second response (65) for the user utterance on the basis of the user input (67), in response to termination of the user utterance. Other embodiments may be possible.

## Description

### TECHNICAL FIELD

The following disclosure relates to an electronic device and a user utterance processing method.

### BACKGROUND ART

Applications related to speech recognition and/or natural language processing, such as voice assistants, may process user utterances using large language models.

The above information may be presented as the related art to help with the understanding of the disclosure. No arguments or decisions are raised to whether any of the above description is applicable as the prior art related to the present disclosure.

To improve user convenience, technologies are needed that may reduce the time interval between user utterances and system responses and/or the cost associated with queries.

The technical goals to be achieved are not limited to those described above, and other technical goals not mentioned above are clearly understood by one of ordinary skill in the art from the following description.

### DISCLOSURE OF THE INVENTION

### TECHNICAL SOLUTIONS

An electronic device 101, 201, or 501 according to an embodiment includes at least one processor 120, 203, or 620 and memory 130, 207, or 630 storing instructions. The instructions, when executed by the at least one processor 120, 203, or 620 individually or collectively, may cause the electronic device 101, 201, or 501 to perform a plurality of operations. The plurality of operations may include, in response to obtaining a portion of a user utterance, outputting a first response 63 to the portion. The plurality of operations may include obtaining a user input 67 for the first response. The plurality of operations may include, in response to termination of the user utterance, based on the user input 67, outputting a second response 65 to the user utterance. The outputting of the first response 63 may include retrieving, from the memory 130, 207, or 630, data associated with an entity included in the portion of the user utterance or a combination of entities included in the portion of the user utterance. The outputting of the first response 63 may include, based on the retrieved data, outputting a list of items related to the entity or the combination of the entities.

An electronic device 101, 201, or 501 according to an embodiment includes at least one processor 120, 203, or 620 and memory 130, 207, or 630 storing instructions. The instructions, when executed by the at least one processor 120, 203, or 620 individually or collectively, may cause the electronic device 101, 201, or 501 to perform a plurality of operations. The plurality of operations may include before a user utterance is terminated, identifying an entity from a portion of the user utterance. The plurality of operations may include, in response to the identification of the entity, obtaining, from a data source, data related to the entity. The plurality of operations may include, before the user utterance is terminated, based on the data, outputting information regarding the entity.

A method of operating an electronic device 101, 201, or 501 according to an embodiment includes, in response to obtaining a portion of a user utterance, outputting a first response 63 to the portion. The method includes obtaining a user input 67 for the first response. The method includes, in response to termination of the user utterance, based on the user input 67, outputting a second response 65 to the user utterance.

According to an embodiment, a computer-readable storage medium storing one or more computer programs may include instructions that cause a processor to perform the method described above.

### BRIEF DESCRIPTION OF DRAWINGS

FIG. 1 is a block diagram of an electronic device in a network environment according to an embodiment.
FIG. 2 is a block diagram illustrating an integrated intelligence system according to an embodiment.
FIG. 3 is a diagram illustrating a form in which relationship information between concepts and actions is stored in a database (DB), according to an embodiment.
FIG. 4 is a diagram illustrating a screen of an electronic device processing a received voice input through an intelligent app, according to an embodiment.
FIG. 5 is a diagram illustrating an utterance processing process of an electronic device, according to an embodiment.
FIG. 6 is a schematic block diagram of an electronic device according to an embodiment.
FIG. 7 is a diagram illustrating an example of an utterance processing process according to an embodiment.
FIG. 8 is a diagram illustrating an example of an utterance processing process according to an embodiment.
FIG. 9 is a diagram illustrating an example of an utterance processing process according to an embodiment.
FIG. 10 is a diagram illustrating an example of an utterance processing process according to an embodiment.
FIG. 11 is a diagram illustrating an example of an utterance processing process according to an embodiment.
FIG. 12 is a diagram illustrating an example of an utterance processing process according to an embodiment.
FIG. 13 is a diagram illustrating an example of an utterance processing process according to an embodiment.
FIG. 14 is a flowchart illustrating an operation of an electronic device according to an embodiment.
FIG. 15 is a flowchart illustrating an operation of an electronic device according to an embodiment.

### BEST MODE FOR CARRYING OUT THE INVENTION

Hereinafter, embodiments are described in detail with reference to the accompanying drawings. When describing the embodiments with reference to the accompanying drawings, like reference numerals refer to like components and a repeated description related thereto will be omitted.

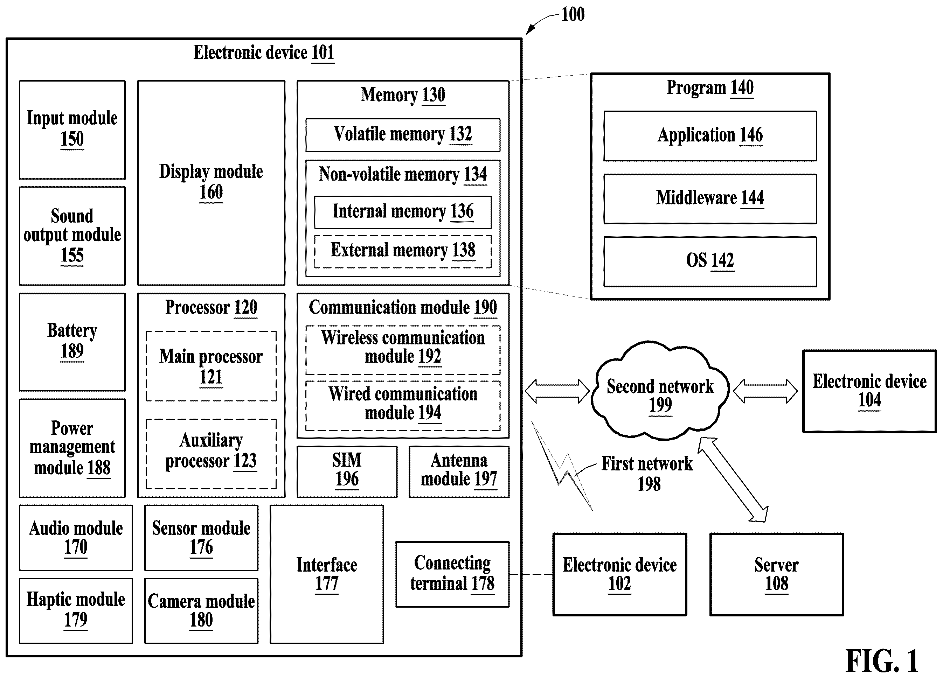

FIG. 1 is a block diagram of an electronic device 101 in a network environment 100 according to an embodiment. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, and a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added to the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is an active state (e.g., executing an application). According to an embodiment, the auxiliary processor 123 (e.g., an ISP or a CP) may be implemented as part of another component (e.g., the camera module 180 or the communication module 190) functionally related to the auxiliary processor 123. According to an embodiment, the auxiliary processor 123 (e.g., the NPU) may include a hardware structure specified for artificial intelligence (AI) model processing. An AI model may be generated by machine learning. Such learning may be performed, e.g., by the electronic device 101 where the AI is performed or via a separate server (e.g., the server 108). Learning algorithms may include, but are not limited to, e.g., supervised learning, unsupervised learning, semi-supervised learning, or reinforcement learning. The AI model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network or a combination of two or more thereof but is not limited thereto. The AI model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. According to an embodiment, when instructions stored in the memory 130 are executed by at least one processor (e.g., the main processor 121 and/or the auxiliary processor 123) individually or collectively, the instructions may cause the electronic device 101 to perform one or more operations. For example, the instructions stored in the memory 130 may be executed by one processor (e.g., the main processor 121 or the auxiliary processor 123 such as a CP) or a plurality of processors (e.g., the main processor 121 and the auxiliary processor 123) operating cooperatively.

The program 140 may be stored in the memory 130 as software, and may include, for example, an operating system (OS) 142, middleware 144, or an application 146.

The input module 150 may receive a command or data to be used by another component (e.g., the processor 120) of the electronic apparatus 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., the electronic device 102) (e.g., a speaker or headphone) directly or wirelessly connected to the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., the AP) and support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form a mmWave antenna module. According to an embodiment, the mmWave antenna module may include a PCB, an RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, cloud computing, distributed computing, mobile edge computing (MEC), or client-server computing technology may be used, for example. The electronic device 101 may provide ultra low-latency services using, e.g., distributed computing or MEC. In another embodiment, the external electronic device 104 may include an Internet-of-Things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

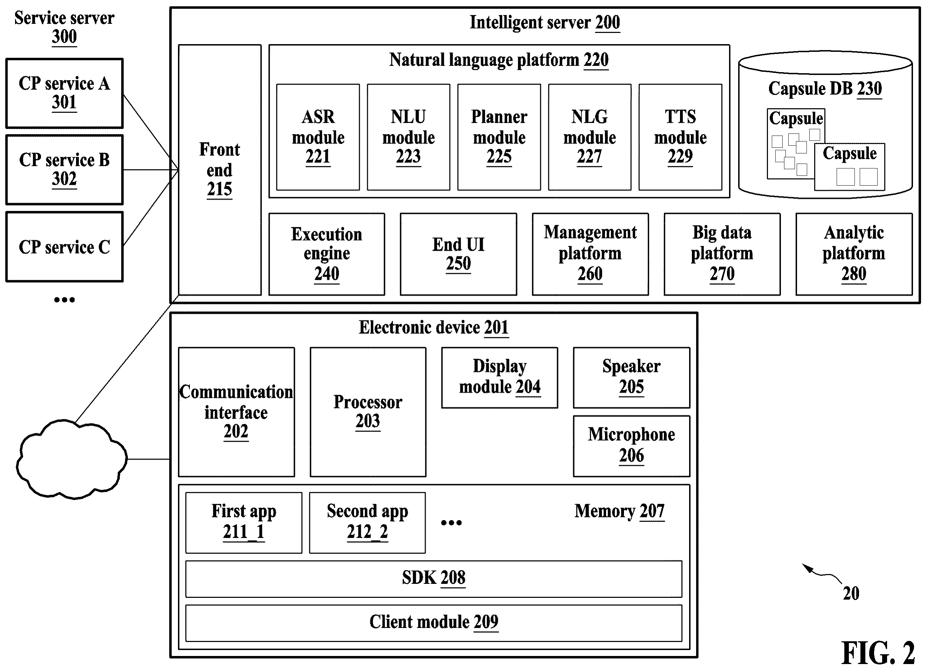

Referring to FIG. 2, an integrated intelligence system 20 according to an embodiment may include an electronic device 201 (e.g., the electronic device 101 of FIG. 1), an intelligent server 200 (e.g., the server 108 of FIG. 1), and a service server 300 (e.g., the server 108 of FIG. 1).

The electronic device 201 according to an embodiment may be a terminal device (or an electronic device) connectable to the Internet, and may be, for example, a mobile phone, a smartphone, a personal digital assistant (PDA), a notebook computer, a TV, a white home appliance, a wearable device, a head-mounted display (HMD), or a smart speaker.

According to the shown embodiment, the electronic device 201 may include a communication interface 202 (e.g., the interface 177 of FIG. 1), a microphone 206 (e.g., the input module 150 of FIG. 1), a speaker 205 (e.g., the sound output module 155 of FIG. 1), a display module 204 (e.g., the display module 160 of FIG. 1), memory 207 (e.g., the memory 130 of FIG. 1), or a processor 203 (e.g., the processor 120 of FIG. 1). The components listed above may be operationally or electrically connected to one another.

The communication interface 202 according to an embodiment may be connected to an external device and configured to transmit and receive data to and from the external device. The microphone 206 according to an embodiment may receive a sound (e.g., a user utterance) and convert the sound into an electrical signal. The speaker 205 according to an embodiment may output the electrical signal as a sound (e.g., a speech).

The display module 204 according to an embodiment may be configured to display an image or video. The display module 204 according to an embodiment may also display a graphical user interface (GUI) of an app (or an application program) being executed. The display module 204 of an embodiment may receive a touch input through a touch sensor. For example, the display module 204 may receive a text input through a touch sensor in an on-screen keyboard area displayed in the display module 204.

The memory 207 may store a client module 209, a software development kit (SDK) 208, and a plurality of apps 211. The client module 209 and the SDK 208 may configure a framework (or a solution program) for performing general-purpose functions. In addition, the client module 209 or the SDK 208 may configure a framework for processing a user input (e.g., a voice input, a text input, or a touch input).

The plurality of apps 211 stored in the memory 207 may be programs for performing designated functions. According to an embodiment, the plurality of apps 211 may include a first app 211_1 and a second app 211_2. According to an embodiment, each of the plurality of apps 211 may include a plurality of actions for performing a designated function. For example, the apps may include an alarm app, a messaging app, and/or a scheduling app. According to an embodiment, the plurality of apps 211 may be executed by the processor 203 to sequentially execute at least a portion of the plurality of actions.

The processor 203 according to an embodiment may control the overall operation of the electronic device 201. For example, the processor 203 may be electrically connected to the communication interface 202, the microphone 206, the speaker 205, and the display module 204 to perform a designated action.

The processor 203 according to an embodiment may also perform the designated function by executing the program stored in the memory 207. For example, the processor 203 may execute at least one of the client module 209 or the SDK 208 to perform the following operation for processing a user input. The processor 203 may control the actions of the plurality of apps 211 through, for example, the SDK 208. The following operation which is the operation of the client module 209 or the SDK 208 may be performed by the processor 203.

The client module 209 according to an embodiment may receive a user input. For example, the client module 209 may receive a speech signal corresponding to a user utterance sensed through the microphone 206. Alternatively, the client module 209 may receive a touch input sensed through the display module 204. Alternatively, the client module 209 may receive a text input sensed through a keyboard or an on-screen keyboard. In addition, the client module 209 may receive various types of user inputs sensed through an input module included in the electronic device 201 or an input module connected to the electronic device 201. The client module 209 may transmit the received user input to the intelligent server 200. The client module 209 may transmit state information of the electronic device 201 together with the received user input to the intelligent server 200. The state information may be, for example, execution state information of an app.

The client module 209 according to an embodiment may receive a result corresponding to the received user input. For example, when the intelligent server 200 is capable of calculating a result corresponding to the received user input, the client module 209 may receive the result corresponding to the received user input. The client module 209 may display the received result on the display module 204. Furthermore, the client module 209 may output the received result in an audio form through the speaker 205.

The client module 209 according to an embodiment may receive a plan corresponding to the received user input. The client module 209 may display results of executing a plurality of actions of an app according to the plan on the display module 204. For example, the client module 209 may sequentially display the results of executing the plurality of actions on the display module 204 and output the results in an audio form through the speaker 205. In another example, the electronic device 201 may display only a portion of the results of executing the plurality of actions (e.g., a result of the last action) on the display module 204 and output the portion of the results in an audio form through the speaker 205.

According to an embodiment, the client module 209 may receive a request for obtaining information necessary for calculating a result corresponding to the user input from the intelligent server 200. According to an embodiment, the client module 209 may transmit the necessary information to the intelligent server 200 in response to the request.

The client module 209 according to an embodiment may transmit, to the intelligent server 200, information on the results of executing the plurality of actions according to the plan. The intelligent server 200 may confirm that the received user input is correctly processed using the information on the results.

The client module 209 according to an embodiment may include a speech recognition module. According to an embodiment, the client module 209 may recognize a voice input for performing a limited function through the speech recognition module. For example, the client module 209 may execute an intelligent app for processing a voice input to perform an organic operation through a designated input (e.g., Wake up!).

The intelligent server 200 according to an embodiment may receive information related to a user voice input from the electronic device 201 through a communication network. According to an embodiment, the intelligent server 200 may change data related to the received voice input into text data. According to an embodiment, the intelligent server 200 may generate a plan for performing a task corresponding to the user voice input based on the text data.

According to an embodiment, the plan may be generated by an AI system. The AI system may be a rule-based system or a neural network-based system (e.g., a feedforward neural network (FNN) or a recurrent neural network (RNN)). Alternatively, the AI system may be a combination of the above-described systems or other AI systems. According to an embodiment, the plan may be selected from a set of predefined plans or may be generated in real time in response to a user request. For example, the AI system may select at least one plan from the pre-defined plans.

The intelligent server 200 according to an embodiment may transmit a result according to the generated plan to the electronic device 201 or transmit the generated plan to the electronic device 201. According to an embodiment, the electronic device 201 may display the result according to the plan on the display module 204. According to an embodiment, the electronic device 201 may display a result of executing an action according to the plan on the display module 204.

The intelligent server 200 may include a front end 215, a natural language platform 220, a capsule database (DB) 230, an execution engine 240, an end UI 250, a management platform 260, a big data platform 270, or an analytic platform 280.

The front end 215 according to an embodiment may receive the received user input from the electronic device 201. The front end 215 may transmit a response corresponding to the user input.

According to an embodiment, the natural language platform 220 may include an automatic speech recognition (ASR) module 221, a natural language understanding (NLU) module 223, a planner module 225, a natural language generator (NLG) module 227, or a text-to-speech (TTS) module 229.

The ASR module 221 according to an embodiment may convert data related to a voice input received from the electronic device 201 into text data. The NLU module 223 according to an embodiment may determine a domain (and/or intent information) corresponding to a voice input (e.g., a user utterance) based on the text data of the voice input. The domain may correspond to a category (or a service) associated with an action (or a function) that the user intends to execute using a device. The domain may be classified based on a service (e.g., an app) related to text. For example, a Gracenote domain may correspond to a music search service (e.g., a Gracenote service). A Melon domain may correspond to a music streaming service (e.g., a Melon service). The domain may be associated with intent information corresponding to text. The NLU module 223 according to an embodiment may discern an intent of a user using the text data of the voice input. For example, the NLU module 223 may discern an intent of a user by performing syntactic analysis or semantic analysis on a user input in the form of text data. The NLU module 223 according to an embodiment may discern the meaning of a word extracted from the user input using a linguistic feature (e.g., a grammatical element) of a morpheme or phrase and determine the intent of the user by matching the discerned meaning of the word to an intent. The NLU module 223 may obtain intent information corresponding to a user utterance. The intent information may be information indicating the intent of the user determined through an analysis of the text data. The intent information may include information indicating an action (or function) that the user intends to execute using a device. A slot may be detailed information associated with intent information. The slot may be obtained based on a domain corresponding to an utterance. The slot may be variable information necessary to perform an action. In an embodiment, variable information included in a slot may include a named entity.

The planner module 225 according to an embodiment may generate a plan using a parameter and the intent determined by the NLU module 223. According to an embodiment, the planner module 225 may determine a plurality of domains required to perform a task based on the determined intent. The planner module 225 may determine a plurality of actions included in each of the plurality of domains determined based on the intent. According to an embodiment, the planner module 225 may determine a parameter required to execute the determined plurality of actions, or a result value output by the execution of the plurality of actions. The parameter and the result value may be defined as a concept of a designated form (or class). Accordingly, the plan may include a plurality of actions and a plurality of concepts determined by the intent of the user. The planner module 225 may determine relationships between the plurality of actions and the plurality of concepts stepwise (or hierarchically). For example, based on the plurality of concepts, the planner module 225 may determine an execution order of the plurality of actions determined based on the intent of the user. In other words, the planner module 225 may determine the execution order of the plurality of actions based on the parameter required for the execution of the plurality of actions and results output by the execution of the plurality of actions. Accordingly, the planner module 225 may generate a plan including connection information (e.g., ontology) on connections between the plurality of actions and the plurality of concepts. The planner module 225 may generate the plan using information stored in the capsule DB 230 that stores a set of relationships between concepts and actions.

The NLG module 227 according to an embodiment may change designated information into a text form. The information changed to the text form may be in the form of a natural language utterance. The TTS module 229 according to an embodiment may change information in a text form into information in a speech form.

According to an embodiment, some or all of the functions of the natural language platform 220 may be implemented in the electronic device 201 as well.

The capsule DB 230 may store information on the relationships between the plurality of concepts and actions corresponding to the plurality of domains. A capsule according to an embodiment may include a plurality of action objects (or action information) and concept objects (or concept information) included in the plan. According to an embodiment, the capsule DB 230 may store a plurality of capsules in the form of a concept action network (CAN). According to an embodiment, the plurality of capsules may be stored in a function registry included in the capsule DB 230.

The capsule DB 230 may include a strategy registry that stores strategy information necessary for determining a plan corresponding to a voice input. The strategy information may include reference information for determining one plan when there is a plurality of plans corresponding to the user input. According to an embodiment, the capsule DB 230 may include a follow-up registry that stores information on follow-up actions for suggesting a follow-up action to the user in a designated situation. The follow-up action may include, for example, a follow-up utterance. According to an embodiment, the capsule DB 230 may include a layout registry that stores layout information that is information output through the electronic device 201. According to an embodiment, the capsule DB 230 may include a vocabulary registry that stores vocabulary information included in capsule information. According to an embodiment, the capsule DB 230 may include a dialog registry that stores information on a dialog (or an interaction) with the user. The capsule DB 230 may update the stored objects through a developer tool. The developer tool may include, for example, a function editor for updating an action object or a concept object. The developer tool may include a vocabulary editor for updating a vocabulary. The developer tool may include a strategy editor for generating and registering a strategy for determining a plan. The developer tool may include a dialog editor for generating a dialog with a user. The developer tool may include a follow-up editor capable of activating a follow-up goal and editing a follow-up utterance that provides a hint. The follow-up goal may be determined based on a currently set goal, a preference of a user, or an environmental condition. In an embodiment, the capsule DB 230 may be implemented in the electronic device 201 as well.

The execution engine 240 according to an embodiment may calculate a result using the generated plan. The end UI 250 may transmit the calculated result to the electronic device 201. Accordingly, the electronic device 201 may receive the result and provide the received result to the user. The management platform 260 according to an embodiment may manage information used by the intelligent server 200. The big data platform 270 according to an embodiment may collect data of the user. The analytic platform 280 according to an embodiment may manage a quality of service (QoS) of the intelligent server 200. For example, the analytic platform 280 may manage the components and processing rate (or efficiency) of the intelligent server 200.

The service server 300 according to an embodiment may provide a designated service (e.g., food order or hotel reservation) to the electronic device 201. According to an embodiment, the service server 300 may be a server operated by a library server. The service server 300 according to an embodiment may provide information to be used for generating a plan corresponding to the received user input to the intelligent server 200. The provided information may be stored in the capsule DB 230. In addition, the service server 300 may provide result information according to the plan to the intelligent server 200.

In the integrated intelligence system 20 described above, the electronic device 201 may provide various intelligent services to the user in response to a user input. The user input may include, for example, an input through a physical button, a touch input, or a voice input.

In an embodiment, the electronic device 201 may provide a speech recognition service through an intelligent app (or a speech recognition app) stored therein. In this case, for example, the electronic device 201 may recognize a user utterance or a voice input received through the microphone and provide a service corresponding to the recognized voice input to the user.

In an embodiment, the electronic device 201 may perform a designated action alone or together with the intelligent server and/or a service server, based on the received voice input. For example, the electronic device 201 may execute an app corresponding to the received voice input and perform a designated action through the executed app.

In an embodiment, when the electronic device 201 provides a service together with the intelligent server 200 and/or the service server 300, the electronic device 201 may detect a user utterance using the microphone 206 and generate a signal (or voice data) corresponding to the detected user utterance. The electronic device 201 may transmit the voice data to the intelligent server 200 using the communication interface 202.

The intelligent server 200 according to an embodiment may generate, as a response to the voice input received from the electronic device 201, a plan for performing a task corresponding to the voice input or a result of performing an action according to the plan. The plan may include, for example, a plurality of actions for performing a task corresponding to a voice input of a user, and a plurality of concepts related to the plurality of actions. The concepts may be defined as parameters that are input for execution of the plurality of actions or result values that are output by execution of the plurality of actions. The plan may include connection information on connections between the plurality of actions and the plurality of concepts.

The electronic device 201 may receive the response using the communication interface 202. The electronic device 201 may output a speech signal generated inside the electronic device 201 to the outside using the speaker 205 or may output an image generated inside the electronic device 201 to the outside using the display module 204.

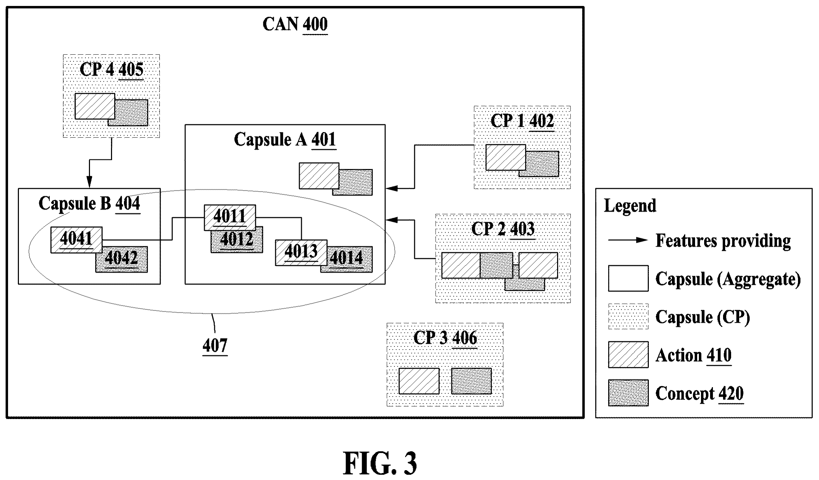

FIG. 3 is a diagram illustrating a form in which relationship information between concepts and actions is stored in a DB, according to various embodiments.

A capsule DB (e.g., the capsule DB 230 of FIG. 2) of the intelligent server (e.g., the intelligent server 200 of FIG. 2) may store capsules in the form of a CAN 400. The capsule DB may store an action for processing a task corresponding to a voice input of a user and a parameter necessary for the action in the form of a CAN.

The capsule DB may store a plurality of capsules (a capsule A 401 and a capsule B 404) respectively corresponding to a plurality of domains. According to an embodiment, one capsule (e.g., the capsule A 401) may correspond to one domain (e.g., a location (geo) or an application). In addition, one capsule may correspond to at least one service provider (e.g., CP 1 402 or CP 2 403) for performing a function for a domain related to the capsule. According to an embodiment, one capsule may include at least one action 410 for performing a designated function and at least one concept 420.

A natural language platform (e.g., the natural language platform 220 of FIG. 2) may generate a plan for performing a task corresponding to the received voice input using the capsules stored in the capsule DB. For example, a planner module (e.g., the planner module 225 of FIG. 2) of the natural language platform may generate a plan using the capsules stored in the capsule DB. For example, a plan 407 may be generated using actions 4011 and 4013 and concepts 4012 and 4014 of the capsule A 401 and an action 4041 and a concept 4042 of the capsule B 404.

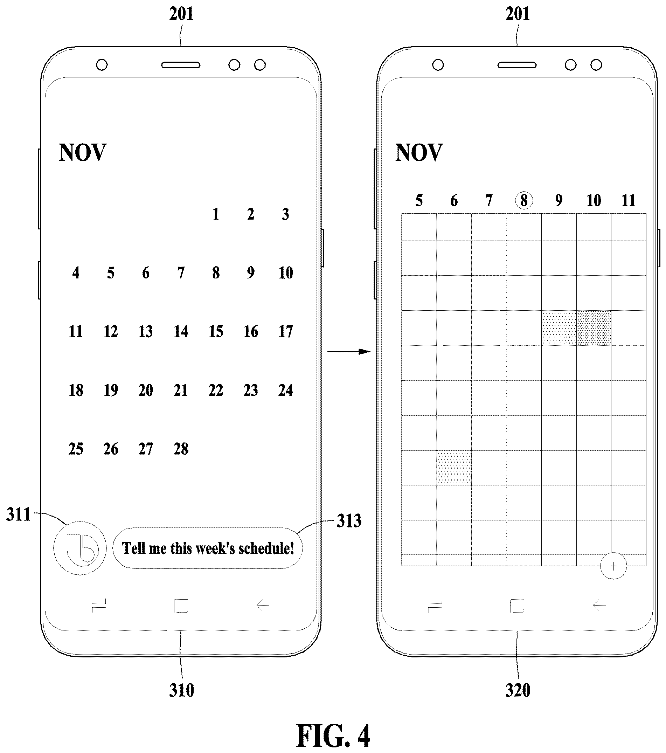

FIG. 4 is a diagram illustrating a screen of an electronic device processing a received voice input through an intelligent app according to various embodiments.

The electronic device 201 may execute an intelligent app to process a user input through an intelligent server (e.g., the intelligent server 200 of FIG. 2).

According to an embodiment, on a screen 310, when a designated voice input (e.g., Wake up!) is recognized or an input through a hardware key (e.g., a dedicated hardware key) is received, the electronic device 201 may execute an intelligent app for processing the voice input. The electronic device 201 may execute the intelligent app, for example, in a state in which a scheduling app is executed. According to an embodiment, the electronic device 201 may display an object (e.g., an icon) 311 corresponding to an intelligent app on the display module 204 (e.g., the display module 160 of FIG. 1 and the display module 204 of FIG. 2). According to an embodiment, the electronic device 201 may receive a voice input by a user utterance. For example, the electronic device 201 may receive a voice input of "Tell me this week's schedule." According to an embodiment, the electronic device 201 may display a UI 313 (e.g., an input window) of the intelligent app in which text data of the received voice input is displayed on the display module 204.

According to an embodiment, on a screen 320, the electronic device 201 may display a result corresponding to the received voice input on the display module 204. For example, the electronic device 201 may receive a plan corresponding to the received user input and display "this week's schedule" on the display module 204 according to the plan.

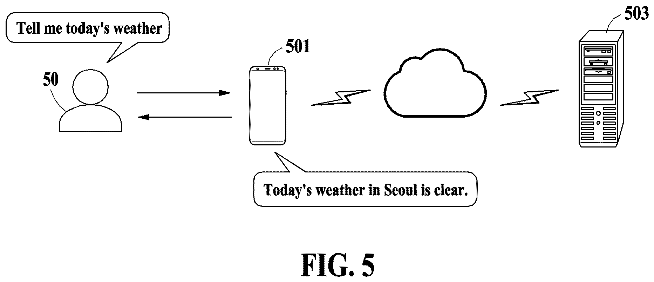

FIG. 5 is a diagram illustrating an utterance processing process of an electronic device, according to an embodiment.

Referring to FIG. 5, according to an embodiment, an electronic device 501 may include at least some components of the electronic device 101 described with reference to FIG. 1 and the electronic device 201 described with reference to FIG. 2. An intelligent server 503 may include at least some components of the intelligent server 200 described with reference to FIG. 2. With respect to the electronic device 501 and the intelligent server 503, repeated descriptions provided with reference to FIGS. 1 to 4 are omitted.

According to an embodiment, the electronic device 501 (e.g., the electronic device 101 of FIG. 1 or the electronic device 201 of FIG. 2) may be connected to the intelligent server 503 (e.g., the intelligent server 200 of FIG. 2) via a LAN, a WAN, a value-added network (VAN), a mobile radio communication network, a satellite communication network, or any combination thereof. The electronic device 501 and the intelligent server 503 may communicate with each other through a wired communication method or a wireless communication method (e.g., a wireless LAN (Wi-Fi), Bluetooth, Bluetooth low energy, ZigBee, Wi-Fi Direct (WFD), ultra-wideband (UWB), infrared data association (IrDA), and near-field communication (NFC)). The electronic device 501 may communicate with a nearby device (e.g., the electronic device 102 of FIG. 1 or the electronic device 104 of FIG. 1) positioned around the electronic device 501.

According to an embodiment, the electronic device 501 may be implemented as at least one of a smartphone, a tablet personal computer (PC), a mobile phone, a speaker (e.g., an AI speaker), a video phone, an e-book reader, a desktop PC, a laptop PC, a netbook computer, a workstation, a server, a personal digital assistant (PDA), a portable multimedia player (PMP), an MP3 player, a mobile medical device, a camera, or a wearable device.

According to an embodiment, the electronic device 501 may obtain a speech signal corresponding to an utterance (e.g., a speech utterance) of a user 50 and transmit the speech signal to the intelligent server 503. The intelligent server 503 may obtain textual data corresponding to the utterance of the user 50 based on the speech signal. The textual data may be obtained by converting a speech portion into computer-readable text by performing an automatic speech recognition (ASR) process on the speech signal. However, when the utterance of the user is a text utterance rather than a speech utterance, the process of converting a speech signal into textual data may be omitted. The intelligent server 503 may analyze the utterance of the user using the textual data. The intelligent server 503 may perform a required function using an analysis result (e.g., intent information, an entity, and/or a capsule) or may provide, to a device (e.g., the electronic device 501), a response (e.g., a question and an answer) to be provided to the user. The intelligent server 503 may be implemented as software. A portion or entirety of the intelligent server 503 may be implemented in the electronic device 501 and/or the intelligent server 503 (e.g., the intelligent server 200 of FIG. 2). On-device AI for processing a user utterance without communication with the intelligent server 503 may be installed in the electronic device 501. Components, such as the natural language platform 220 described with reference to FIGS. 2 to 4, may be implemented in the electronic device 501.

According to an embodiment, an ASR module (e.g., the ASR module 221 of FIG. 2) included in the natural language platform 220 may convert a user utterance into textual data. An NLU module (e.g., the NLU module 223 of FIG. 2) included in the natural language platform 220 may determine a domain and/or intent information corresponding to a user utterance using textual data corresponding to the user utterance.

According to an embodiment, a domain may correspond to a category (or a service) associated with an action (or a function) that a user intends to execute using a device. A domain may be categorized based on a service (e.g., an application) related to a user utterance. For example, a Gracenote domain may correspond to a music search service (e.g., a Gracenote service). For example, a Melon domain may correspond to a music play service (e.g., a Melon service).

According to an embodiment, a plurality of user utterances may be processed based on respective corresponding domains. A task corresponding to a user utterance may be processed in a capsule (e.g., an application). One capsule may correspond to one domain. One capsule may include at least one action for performing a designated function and at least one concept. One capsule (or domain) may include or process a plurality of pieces of intent information. A capsule may process a task corresponding to a user utterance based on intent information. Intent information may be determined by a capsule or by an NLU module.

According to an embodiment, intent information may be information indicating the intent of a user determined through interpretation of textual data. The intent information may include information indicating an action (or function) that the user intends to execute using a device.

According to an embodiment, a slot may be a placeholder (or variable) related to a specific type of information that needs to be extracted from a user input (e.g., a user utterance) to generate a response corresponding to a user utterance. An entity may be a value extracted from a user input and assigned to a corresponding slot. For example, when text converted from a user utterance is "Tell me today's weather," the electronic device 501 may identify a 'date slot' from the user input and assign 'today' to the 'date slot.'

According to an embodiment, the electronic device 501 may output a response corresponding to the user utterance. For example, in response to receiving the user utterance "Tell me today's weather in Seoul" from the user 50, the electronic device 501 may output a response (e.g., "Today's weather in Seoul is clear") by performing a speech recognition process and a natural language process.

According to an embodiment, the electronic device 501 may output a response in various ways. For example, the electronic device 501 may visually output a response using a display module (e.g., the display module 160 of FIG. 1). In another example, the electronic device 501 may output a response as sound using an audio module (e.g., the audio module 170 of FIG. 1).

According to an embodiment, some or all operations performed by the electronic device 501 may be performed by the electronic device 501 and/or the intelligent server 503. Hereinafter, a description is provided based on an assumption that the electronic device 501 performs the operations.

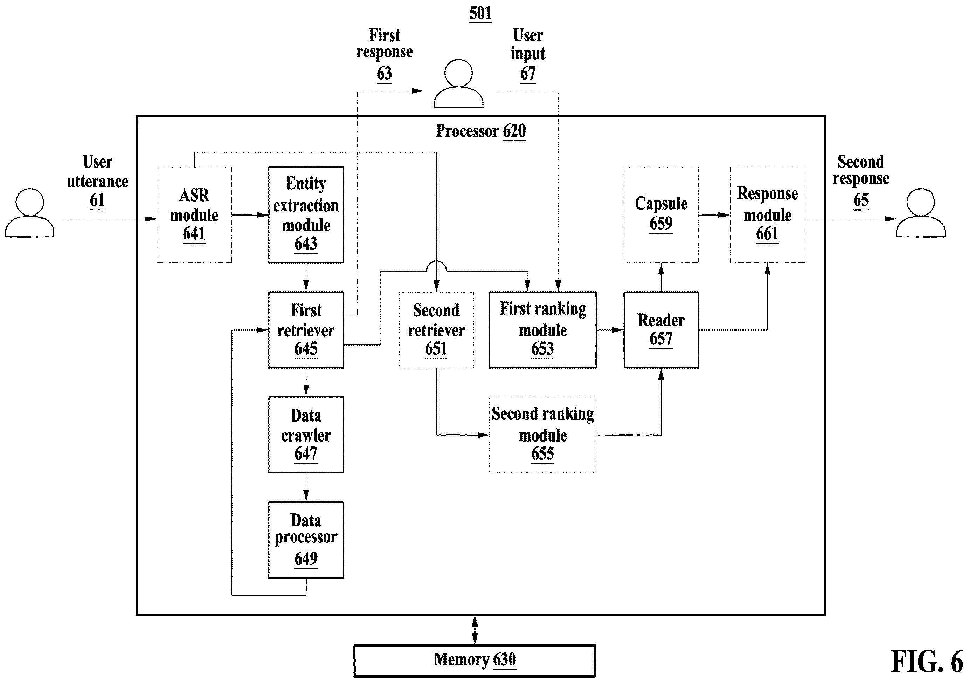

FIG. 6 is a schematic block diagram of an electronic device according to an embodiment.

Referring to FIG. 6, according to an embodiment, the electronic device 501 may include a processor 620 (e.g., the processor 120 of FIG. 1 and the processor 203 of FIG. 2) and memory 630 (e.g., the memory 130 of FIG. 1 and the memory 207 of FIG. 2). The processor 620 may access the memory 630 and execute one or more instructions. The processor 620 may cause the electronic device 501 to perform one or more operations to generate (or output) a response to a user utterance based on one or more modules (e.g., software modules).

According to an embodiment, the processor 620 may include an ASR module 641 (e.g., the ASR module 221 of FIG. 2), an entity extraction module 643, a first retriever 645, a data crawler 647, a data processor 649, a second retriever 651, a first ranking module 653, a second ranking module 655, a reader 657, a capsule 659 (e.g., the capsule of FIG. 3), and/or a response module 661.

According to an embodiment, the ASR module 641 may convert a speech signal corresponding to a user utterance (e.g., a speech utterance) into textual data in real time. When the user utterance is a text utterance rather than a speech utterance, a process performed by the ASR module 641 may be omitted. Hereinafter, it may be assumed that textual data corresponding to a user utterance is input to the entity extraction module 643 and/or the second retriever 651 in real time.

According to an embodiment, the entity extraction module 643 may extract, from a portion of the user utterance in real time, a value (e.g., an entity or a combination of entities) related to information for determining the intent of a user utterance. For example, when the user utterance is "Michael Jackson songs, tell me," the entity extraction module 643 may extract the entity "Michael Jackson" and/or a combination of entities "Michael Jackson songs" in real time from a portion of the user utterance before the user utterance is terminated. The entity extraction module 643 may transmit, to the first retriever 645, data related to the entity (or a combination of entities) extracted from the portion of the user utterance. For example, a value transmitted to the first retriever 645 may be a token (e.g., a token of an n-gram).

According to an embodiment, the first retriever 645 may transmit, to the data crawler 647, a request for information regarding data (e.g., an entity or a combination of entities) received from the entity extraction module 643. For example, when the entity "Michael Jackson" is extracted from the user utterance, the first retriever 645 may transmit, to the data crawler 647, a request for information (e.g., image or textual data) regarding the entity "Michael Jackson." The first retriever 645 may include a rule-based model and/or a statistics-based model.

According to an embodiment, based on the data received from the data processor 645, the first retriever 645 may output a first response 63 (e.g., information regarding an entity or a combination of entities and a source of information) to a user. In the present disclosure, the first response 63 may be a response to a portion of a user utterance (e.g., an entity or a combination of entities). The first retriever 645 may output the first response 63 in various ways. For example, the first retriever 645 may visually output the first response through a screen of the electronic device 501.

According to an embodiment, the first retriever 645 may transmit, to the first ranking module 653, data related to the first response 63.

According to an embodiment, the data crawler 647 may, in response to an information request from the first retriever 645, retrieve, from one or more data sources, information regarding an entity (or a combination of entities) extracted from the portion of the user utterance. For example, the data crawler 647 may retrieve (or obtain) information (or data) from an external data source, such as a website, and/or an internal data source stored in the memory 630. For example, the data crawler 647 may extract textual data related to an entity (or a combination of entities) from a data source. The data crawler 647 may transmit information and/or the source of the information to the data processor 649.

According to an embodiment, the data processor 649 may process data (e.g., information and/or the source of the information) received from the data crawler 647 so as to be suitable for the first retriever 645 and may transmit the processed data to the first retriever 645. For example, the data processor 649 may perform data preprocessing, such as DB indexing.

According to an embodiment, the first ranking module 653 may determine the intent of the user related to the entity (or a combination of entities) extracted from the portion of the user utterance based on the user input 67 for the first response 63. For example, when the user utterance is "Tell me about Michael," the first retriever 645 may output a list of celebrities with the name "Michael" (e.g., first name) as the first response 63, and a user may select one person (e.g., singer Michael Jackson) from the list. The first ranking module 653 may determine, based on the user selection, that the intent of the user related to the entity "Michael" included in a portion of the user utterance is "Michael Jackson." The first ranking module 653 may transmit data related to user intent to the reader 657 in various formats. For example, the first ranking module 653 may transmit, to the reader 657, data in a format suitable for a generative model (e.g., prompt format or JavaScript Object Notation (JSON)).

According to an embodiment, the second retriever 651 may receive textual data corresponding to a user utterance (e.g., the entire user utterance) and generate a response corresponding to the user utterance. In the present disclosure, a user utterance may be a user utterance for which an endpoint is detected. Textual data that is input to the second retriever 651 may be text including one or more sentences. For example, an input to the second retriever 651 may be text such as "Tell me the age difference between the director of the movie Avatar and the director of the movie Titanic." According to an embodiment, the second retriever 651 may include a rule-based model and/or a statistical model.

According to an embodiment, the second retriever 651 may generate one or more candidate responses corresponding to a user utterance. For example, when the user utterance is "Tell me a sport that suits me," the second retriever 651 may generate baseball, basketball, and soccer as candidate responses based on data (e.g., a lifestyle pattern of a user) stored in a data source (e.g., the memory 630). The second retriever 651 may transmit one or more candidate responses to the reader 657. A process performed by the second retriever 651 may be omitted based on a user utterance 61 and the first user response 63. For example, when the user utterance is "Tell me about Michael Jackson," and the first response 63 is substantially the same as a second response 65, one or more processes performed by the second retriever 651 may be omitted. In the present disclosure, the second response 65 may be a response to the user utterance for which an endpoint is detected.

According to an embodiment, the second ranking module 655 may receive one or more candidate responses from the second retriever 651 and determine a rank for the one or more candidate responses. For example, when "baseball," "basketball," and "soccer" are received as candidate responses from the second retriever 651, the second ranking module 655 may determine the ranking of the candidate responses in the order of "baseball," "basketball," and "soccer" based on user-related information such as a user policy (e.g., kids mode), a lifestyle pattern of a user, and/or an electronic device usage pattern of a user (e.g., frequency of use of applications). The second ranking module 655 may transmit data related to a candidate response (e.g., the highest ranked candidate response) to the reader 657 in various formats. For example, the second ranking module 655 may transmit data to the reader 657 in a format suitable for the generative model (e.g., prompt format or JSON). The second ranking module 655 may generate an additional user response based on a user input for the second response 65 generated based on a candidate response (e.g., the highest ranked candidate response). For example, although the second response 65, "The sport that suits you is baseball," is output, a user may respond to the second response 65 by saying, "I don't like baseball. Tell me another sport," the second ranking module 655 may, based on the ranking of the previously generated candidate responses (e.g., baseball (1), basketball (2), soccer (3)), output an additional user response such as "The sport that suits you is basketball." When a process performed by the second retriever 651 is omitted and/or when only one candidate response is generated by the second retriever 651, one or more processes performed by the second ranking module 655 may be omitted.

According to an embodiment, the reader 657 (e.g., a generative model) may generate outputs in various forms based on data that is input from the first ranking module 653 and/or the second ranking module 653. For example, the reader 657 may generate an output that includes one or more pieces of information corresponding to a user utterance, an application programming interface (API), and a command.

According to an embodiment, the capsule 659 (e.g., an application) may perform a predetermined action based on data received from the reader 657. For example, the capsule 659 such as an alarm application (e.g., a clock) may receive data (e.g., alarm setting-related data) from the reader 657, set an alarm, and provide information regarding the set alarm to a user.

According to an embodiment, the response module 661 may output the data received from the reader 657 or the capsule 659 as is or may post-process data received from the reader 657 or the capsule 659 and output the post-processed data. For example, the response module 661 may convert the data received from the reader 657 or the capsule 659 into data in another format, such as an image or video, and output the converted data.

According to an embodiment, the memory 630 may store data used by at least one component (e.g., the processor 620) of the electronic device 501. For example, the memory 630 may store user-related data such as information regarding an external electronic device (e.g., an Internet of Things (IoT) device) connected to the electronic device 501, an electronic device usage pattern of a user (e.g., frequency of use of applications), and/or a lifestyle pattern of the user.

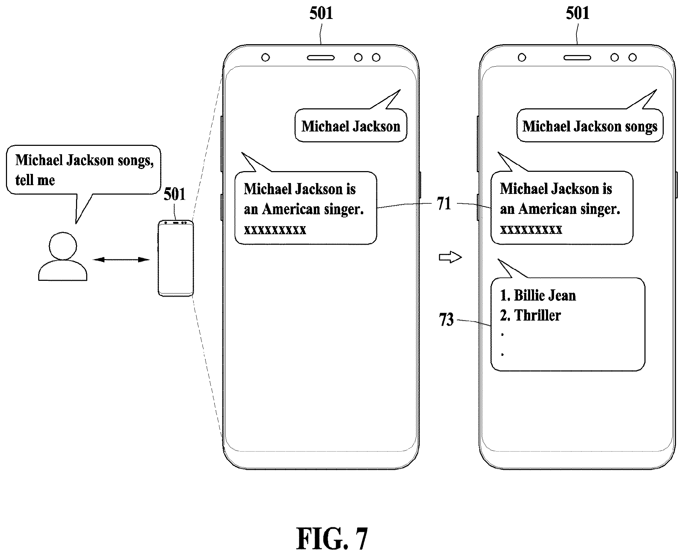

FIG. 7 is a diagram illustrating an example of an utterance processing process according to an embodiment.

Referring to FIG. 7, according to an embodiment, the electronic device 501 may identify an entity (or a combination of entities) included in a portion of a user utterance in real time and output a response (e.g., the first response 63 of FIG. 6) to the identified entity (or a combination of entities). The electronic device 501 may output a response to the identified entity (or a combination of entities) before the user utterance is terminated. For example, when the user utterance is "Michael Jackson songs, tell me," the electronic device 501 may identify in real time an entity "Michael Jackson" and/or a combination of entities "Michael Jackson songs" included in the portion of the user utterance and output information 71 regarding the identified entity and/or information 73 regarding a combination of entities before the user utterance is terminated.

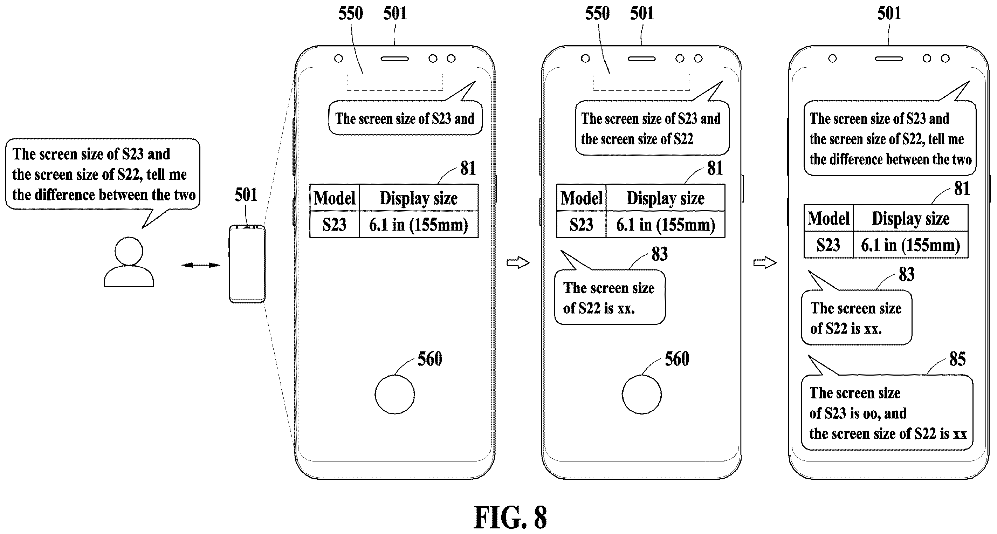

FIG. 8 is a diagram illustrating an example of an utterance processing process according to an embodiment.

Referring to FIG. 8, according to an embodiment, the electronic device 501 may identify entities (or combinations of entities) included in a portion of a user utterance in real time and provide a response (e.g., the first response 63 of FIG. 6) for each of the identified entities (or combinations of entities). The electronic device 501 may provide a response to the identified entities (or combinations of entities) before the user utterance is terminated. For example, when the user utterance is "The screen size of S23 and the screen size of S22, tell me the difference between the two," the electronic device 501 may identify, in real time, a first combination of entities, "the screen size of S23," and a second combination of entities, "the screen size of S22," from the user utterance, and may output pieces of information 81 and 83 regarding the identified combinations of entities before the user utterance is terminated.

According to an embodiment, the electronic device 501 may output a response (e.g., the second response 65 of FIG. 6) to the user utterance after the user utterance is terminated. For example, when the user utterance is "The screen size of S23 and the screen size of S22, tell me the difference between the two," the electronic device 501 may output the pieces of information 81 and 83 (e.g., a first response) regarding the combinations of entities included in a portion of the user utterance before the user utterance is terminated and may output a piece of information 85 (e.g., a second response) regarding the user utterance after the user utterance is terminated.

According to an embodiment, the electronic device 501 may indicate that user utterance processing is in progress from the time the user utterance is obtained until information 85 regarding the user utterance (e.g., the second response) is output. For example, the electronic device 501 may display, in a region (e.g., a region 550) of a display of the electronic device 501, a status notification message, such as "User utterance processing is in progress. The final response to the user utterance has not yet been output." In another example, the electronic device 501 may differentiate the output format (e.g., the color and/or shape of a speech bubble) of the pieces of information 81 and 83 (e.g., the first response) regarding combinations of entities included in a portion of the user utterance from the output format of the piece of information 85 regarding the user utterance.

According to an embodiment, the electronic device 501 may terminate the user utterance processing in response to a user input received before the piece of information 85 regarding the user utterance is output. When the user obtains target information from the pieces of information 81 and 83 regarding the entities included in a portion of the user utterance, the user may no longer need the piece of information 85 regarding the user utterance. The electronic device 501 may provide a UI (e.g., a button 560) for terminating the user utterance processing, and the electronic device 501 may terminate the user utterance processing in response to a user input received through the UI.

According to an embodiment, since pieces of information (e.g., the pieces of information 81 and 83) about entities (or combinations of entities) included in a portion of a user utterance are output before the user utterance is terminated, a user may obtain substantially the same information as the information (e.g., the information 85) that the user desires to obtain via the user utterance in a short period of time.

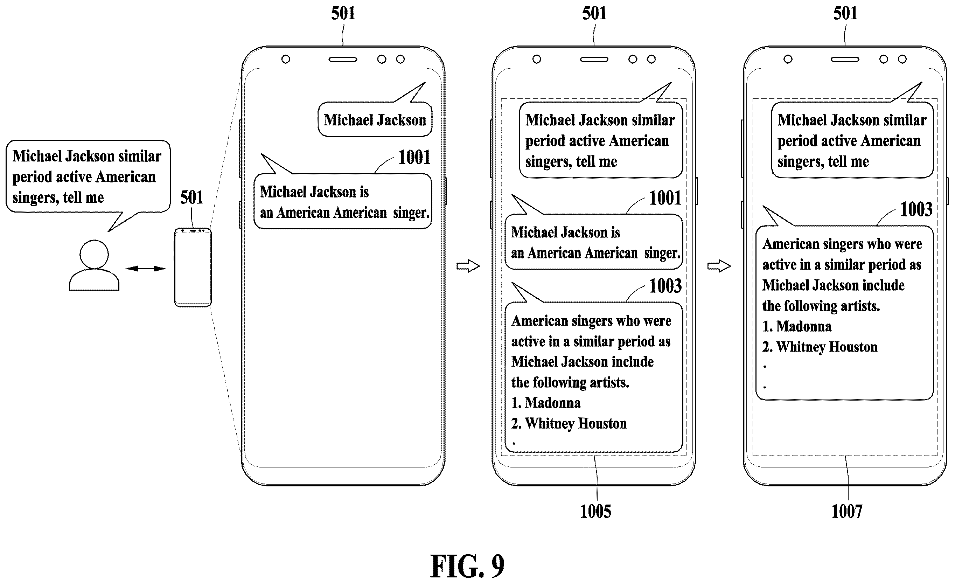

FIG. 9 is a diagram illustrating an example of an utterance processing process according to an embodiment.

Referring to FIG. 9, according to an embodiment, the electronic device 501 may determine whether to cancel output of a response (e.g., the first response 63) to an entity (or a combination of entities) based on a relationship between a response (e.g., the first response 63 of FIG. 6) to an entity (or a combination of entities) included in a portion of a user utterance and a response (e.g., the second response 65 of FIG. 6) to the user utterance. For example, when the relevance between the response (e.g., the first response 63) to the entity and the response (e.g., the second response 65) to the user utterance is low, the electronic device 501 may cancel the output of the response (e.g., the first response 63) to the entity and output only the response (e.g., the second response 65) to the user utterance. In another example, when the response (e.g., the first response 63) to the entity and the response (e.g., the second response 65) to the user utterance are contradictory, the electronic device 501 may cancel the output of the response (e.g., the first response 63) to the entity and output only the response (e.g., the second response 65) to the user utterance. For example, when the user utterance is "Michael Jackson similar period active American singers, tell me," the electronic device 501 may identify the entity "Michael Jackson" from a portion of the user utterance and may output information 1001 regarding the identified entity. The electronic device 501 may output information 1003 regarding the user utterance after the user utterance is terminated. When the relevance between the information 1001 and the information 1003 is low, the electronic device 501 may output either a UI 1005 or a UI 1007 after the user utterance is terminated. The UI 1005 may include both information 1001 and information 1003, and the UI 1007 may include only the information 1003.

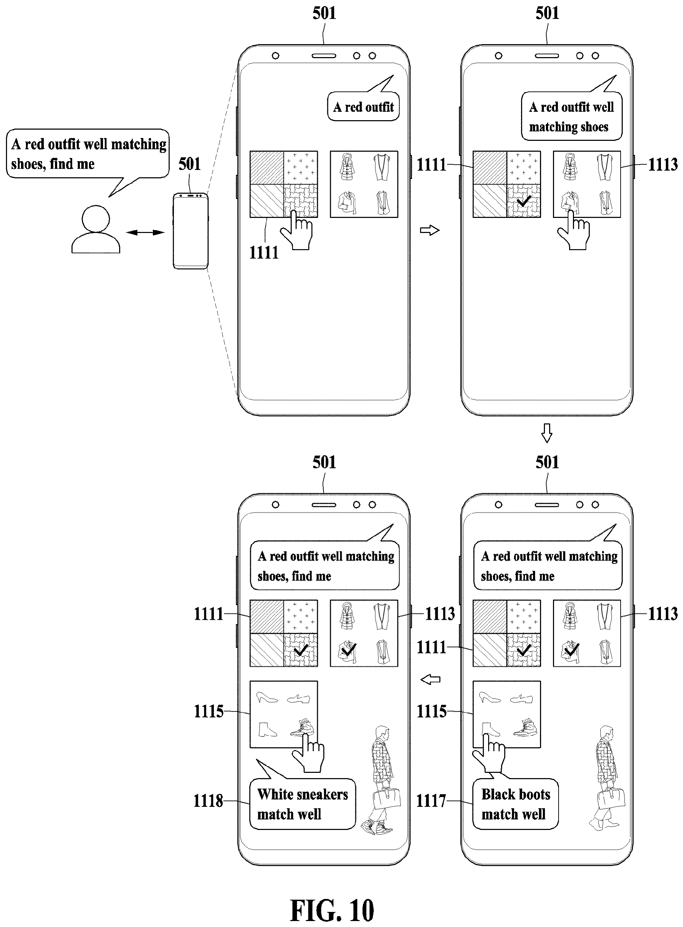

FIG. 10 is a diagram illustrating an example of an utterance processing process according to an embodiment.

Referring to FIG. 10, according to an embodiment, the electronic device 501 may output a response (e.g., the first response 63 of FIG. 6) to an entity (or a combination of entities) included in a portion of a user utterance and may output a response (e.g., the second response 65 of FIG. 6) to the user utterance based on a user input (e.g., the user input 67 of FIG. 6) for the response (e.g., the first response).

According to an embodiment, based on parameters (e.g., domain and category) related to an entity, the electronic device 501 may output a response (e.g., the response 63) in the form of a list of items related to the entity. For example, the electronic device 501 may output a response in the form of a list for an entity related to a fashion item (e.g., shoes or an outfit) that includes an ambiguous entity such as color and/or various sub-entities. For example, when the user utterance is "A red outfit well matching shoes, find me," the electronic device 501 may identify entities "red," "outfit," and "shoes" in real time from a portion of the user utterance and output responses 1111, 1113, and 1115 in the form of a list for the identified entities. The response 1111 may be a list including colors similar to red (e.g., red, crimson, cherry red, and magenta).

According to an embodiment, based on a user input (e.g., a user selection) for the responses 1111, 1113, and 1115, the electronic device 501 may output the response 1117 to the user utterance after the user utterance is terminated. For example, using various means (e.g., voice input or non-voice input such as touch or gestures), a user may select "crimson," "suit," and "boots" from the responses 1111, 1113, and 1115, respectively. Based on a user selection, the electronic device 501 (e.g., the reader 657 of the electronic device 501) may generate one or more prompts (e.g., "A red outfit well matching shoes, find me" and "The color red is close to crimson, the outfit is a suit, and the shoes are boots"). Using a generative model, the electronic device 501 (e.g., the reader 657 of the electronic device 501) may generate the response 1117 corresponding to one or more prompts, such as "Black boots match well." The electronic device 501 may display the response 1117 on a partial region of a screen of the electronic device 501.

According to an embodiment, based on the form of a response (e.g., the first response 63) for an entity (or a combination of entities) included in a portion of the user utterance, the electronic device 501 may maintain an output state of the response (e.g., the first response 63) for an entity (e.g., a combination of entities) even after the user utterance is terminated. For example, when the response (e.g., the first response 63) to an entity (or a combination of entities) is output in a form that may be selected by a user, such as a list, the electronic device 501 may maintain the output state of the response (e.g., the first response 63) to the entity (or a combination of entities) even after the user utterance is terminated.

According to an embodiment, the electronic device 501 may obtain an additional user input for the response (e.g., the first response 63) to an entity (or a combination of entities) even after a response (e.g., the second response 65) to the user utterance is output. Based on the additional user input, the electronic device 501 may change the response (e.g., the second response 65) to the user utterance. For example, when the user utterance is "A red outfit well matching shoes, find me" and the user selects "crimson," "suit," and "boots" from the responses 1111, 1113, and 1115, the electronic device 501 may output the response 1117 to the user utterance, "Black boots match well." After the response 1117 is output, the user may select, from the response 1115 to the entity "shoes," an item (e.g., sneakers) different from a previously selected item (e.g., boots). In response to the user selection, the electronic device 501 may change the response 1117 to the user utterance to the response 1118 "White sneakers match well."

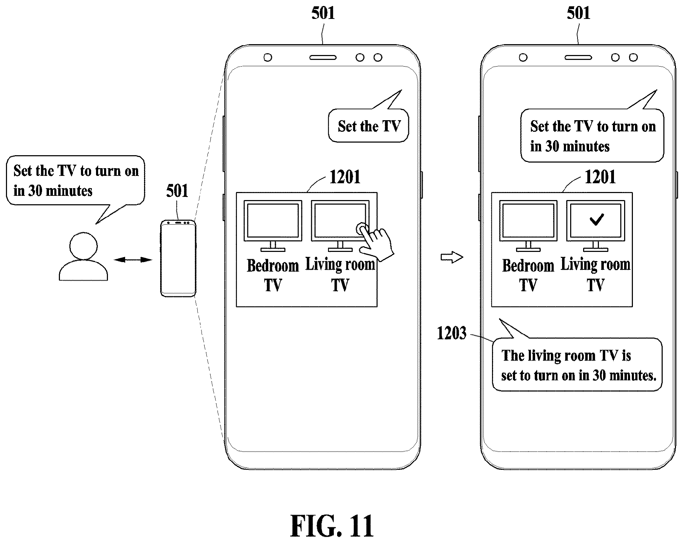

FIG. 11 is a diagram illustrating an example of an utterance processing process according to an embodiment.

Referring to FIG. 11, according to an embodiment, using data stored in memory (e.g., the memory 630 of FIG. 6) of the electronic device 501, the electronic device 501 may output a response (e.g., the first response 63 of FIG. 6) to an entity (or a combination of entities) included in a portion of a user utterance. For example, when the user utterance is "Set the TV to turn on in 30 minutes," the electronic device 501 may identify the entity "TV" in real time from a portion of the user utterance and obtain data related to the identified entity from the memory 630. The electronic device 501 may obtain information regarding TVs (e.g., living room TV and bedroom TV) connected to the electronic device 501 from the memory 630 and output a list 1201 of TVs. Based on a user input (e.g., a user selection such as touch and/or gesture for items within a list) to the list 1201, the electronic device 501 may output a response 1203 to the user utterance after the user utterance is terminated.

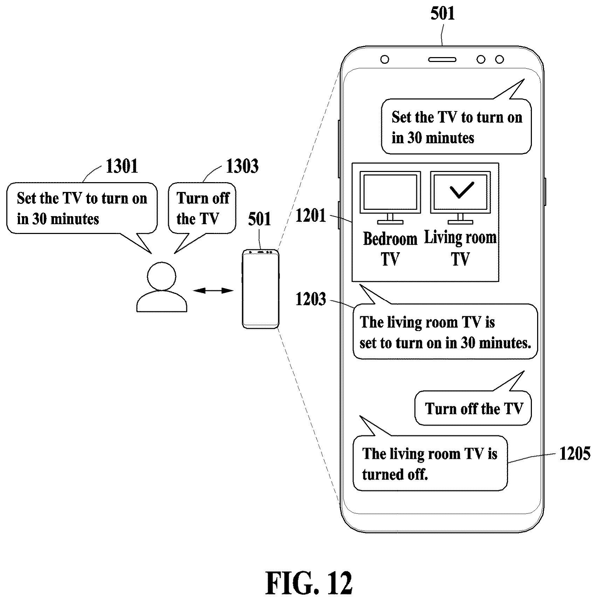

FIG. 12 is a diagram illustrating an example of an utterance processing process according to an embodiment. FIG. 12 may be a diagram illustrating a process of processing an additional user utterance 1303 assuming that the response 1203 to a user utterance 1301 illustrated in FIG. 11 is output.

Referring to FIG. 12, according to an embodiment, based on an intermediate user input for the user utterance 1301, the electronic device 501 may process the additional user utterance 1303. The additional user utterance 1303 may be a user utterance obtained after the user utterance 1301 is terminated. The intermediate user input may be a user input for a response (e.g., the list 1201) related to an entity (or a combination of entities) included in a portion of the user utterance 1301. For example, in a state in which the response 1203 to the user utterance 1301 is output, the electronic device 501 may obtain the additional user utterance 1303 "Turn off the TV," and the electronic device 501 may output a response 1205 "The living room TV is turned off' to the additional user utterance 1303 based on the intermediate user input (e.g., a selection of "living room TV").

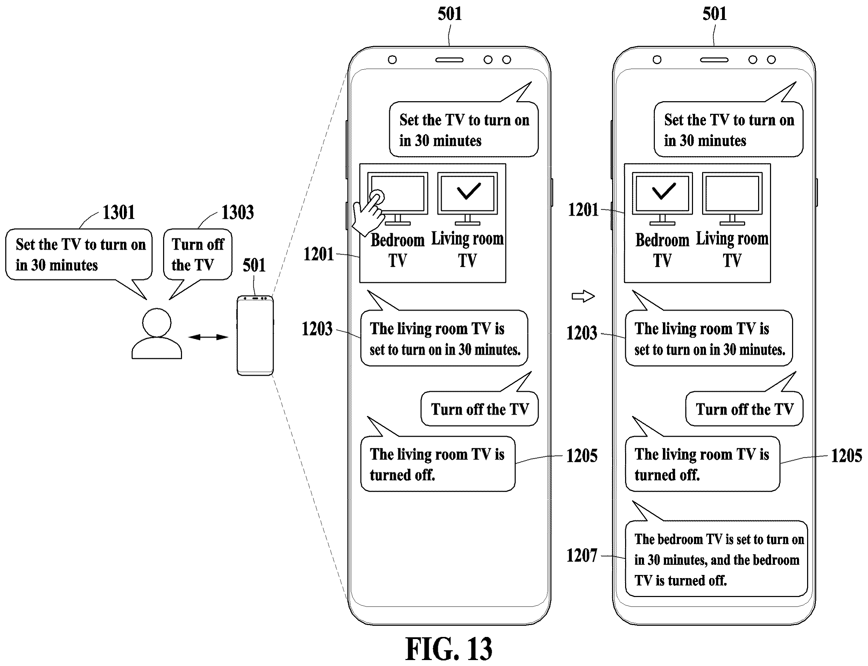

FIG. 13 is a diagram illustrating an example of an utterance processing process according to an embodiment. FIG. 13 may be a diagram illustrating a process of generating an additional response 1207 assuming that the response 1205 to the additional user utterance 1303 illustrated in FIG. 12 is output.

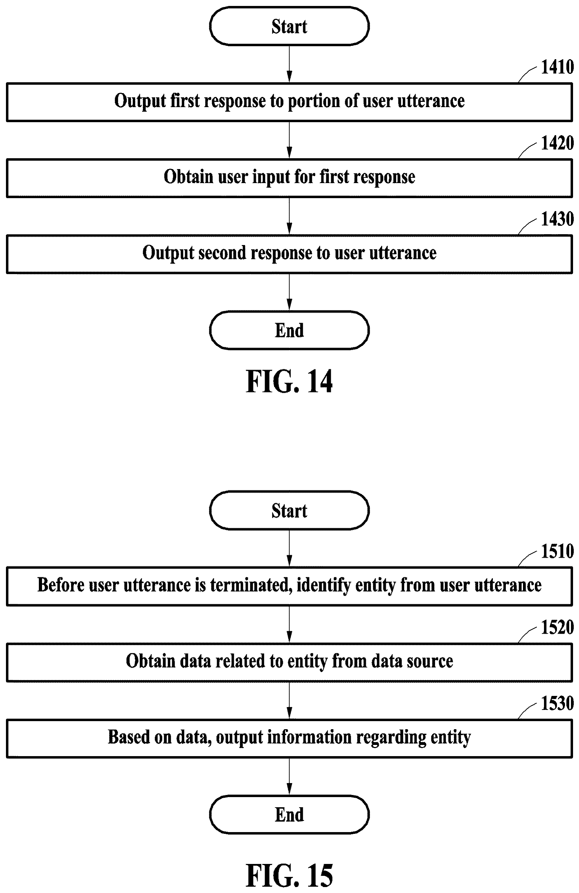

Referring to FIG. 13, according to an embodiment, in response to obtaining an additional user input to an intermediate response, the electronic device 501 may generate an additional response based on a final response. The intermediate response may be a response (e.g., the first response 61 of FIG. 6) to entities (or a combination of entities) included in a portion of a user utterance, and the final response may be a response (e.g., the second response 63 of FIG. 6) to the user utterance. For example, in a state in which the response 1203 to the user utterance 1301 is output, a user may select an item (e.g., bedroom TV) different from a previously selected item (e.g., living room TV) from the list 1201. In response to obtaining an additional user input (e.g., a selection of "bedroom TV") for the list 1201, the electronic device 501 may output an additional response "The bedroom TV is set to turn on in 30 minutes" based on the final response 1203 to the user utterance 1301. In this case, as illustrated in FIG. 14, when the final response 1203 to the user utterance 1301 and the final response 1205 to the additional user utterance 1303 are output, based on the final responses 1203 and 1205 to the user utterance 1301 and the additional user utterance 1303, the electronic device 501 may output the additional response 1207 "The bedroom TV is set to turn on in 30 minutes, and the bedroom TV is turned off."

FIG. 14 is a flowchart illustrating an operation of an electronic device according to an embodiment.

Referring to FIG. 14, according to an embodiment, operations 1410 to 1430 may be sequentially performed, but embodiments are not limited thereto. For example, two or more operations may be performed in parallel. Operations 1410 to 1430 may be substantially the same as the operations of the electronic device (e.g., the electronic device 101 of FIG. 1, the electronic device 201 of FIG. 4, and the electronic device 501 of FIGS. 5 to 13) described with reference to FIGS. 1 to 13. Accordingly, a repeated description thereof is omitted.

In operation 1410, in response to obtaining a portion of a user utterance, an electronic device 101, 201, or 501 may output a first response (e.g., the first response 63 of FIG. 6) to the portion of the user utterance.

In operation 1420, the electronic device 101, 201, or 501 may obtain a user input (e.g., the user input 67 of FIG. 6) for the first response 63.

In operation 1430, in response to the termination of the user utterance, based on the user input 67, the electronic device 101, 201, or 501 may output a second response (e.g., the second response 65 of FIG. 6) to the user utterance.

FIG. 15 is a flowchart illustrating an operation of an electronic device according to an embodiment.

Referring to FIG. 15, according to an embodiment, operations 1510 to 1530 may be sequentially performed, but embodiments are not limited thereto. For example, two or more operations may be performed in parallel. Operations 1510 to 1530 may be substantially the same as the operations of the electronic device (e.g., the electronic device 101 of FIG. 1, the electronic device 201 of FIG. 4, and the electronic device 501 of FIGS. 5 to 13) described with reference to FIGS. 1 to 13. Accordingly, a repeated description thereof is omitted.

In operation 1510, before a user utterance is terminated, an electronic device 101, 201, or 501 may identify an entity from a portion of the user utterance.

In operation 1520, in response to the identification of the entity, the electronic device 101, 201, or 501 may obtain data related to the entity from a data source (e.g., an external data source such as a website and/or an internal data source stored in the memory 630).

In operation 1530, before the user utterance is terminated, based on the obtained data, information regarding the entity may be output.

An electronic device 101, 201, or 501 according to an embodiment may include at least one processor 120, 203, or 620 and memory 130, 207, or 630 storing instructions. The instructions, when executed by the at least one processor 120, 203, or 620 individually or collectively, may cause the electronic device 101, 201, or 501 to perform a plurality of operations. The plurality of operations may include, in response to obtaining a portion of a user utterance, outputting a first response 63 to the portion. The plurality of operations may include obtaining a user input 67 to the first response. The plurality of operations may include, in response to the termination of the user utterance, based on the user input 67, outputting a second response 65 to the user utterance.

The portion may include one or more entities.

The outputting of the first response 63 may include outputting information regarding an entity or a combination of entities before the user utterance is terminated.

The outputting of the information may include outputting a list of items related to the entity and the combination of the entities.

The outputting of the information may include retrieving, from the memory 130, 207 or 630, data associated with the entity or the combination of the entities. The outputting of the information may include, based on the retrieved data, outputting information regarding the entity or the combination of the entities.

The obtaining of the user input 67 may include receiving a user selection for the list.

The electronic device 101, 201, or 501 may further include a display operatively connected to the processor 120, 203, or 620. The first response 63 and the second response 65 may be output through the display.

The outputting of the second response 65 may include, based on the first response 63, outputting one of a first UI and a second UI through the display.

The first UI may include the second response. The second UI may include the first response and the second response.

The outputting through the display may include, based on a relationship between the first response 63 and the second response 65 or a form of the first response 63, outputting one of the first UI and the second UI through the display.

The plurality of operations may further include outputting a third response 1207 based on the second response 65 in response to obtaining an additional user input for the first response 63 after the second response 65 is output.

An electronic device 101, 201, or 501 according to an embodiment may include at least one processor 120, 203, or 620 and memory 130, 207, or 630 storing instructions. The instructions, when executed by the at least one processor 120, 203, or 620 individually or collectively, may cause the electronic device 101, 201, or 501 to perform a plurality of operations. The plurality of operations may include, before a user utterance is terminated, identifying an entity from a portion of the user utterance. The plurality of operations may include, in response to the identification of the entity, obtaining data related to the entity from a data source. The plurality of operations may include, before the user utterance is terminated, based on the data, outputting information regarding the entity.

The obtaining may include extracting, from the data source, textual data related to the entity.

A method of operating an electronic device 101, 201, or 501 according to an embodiment may include, in response to obtaining a portion of a user utterance, outputting a first response 63 to the portion. The method may include obtaining a user input 67 for the first response. The method may include, in response to the termination of the user utterance, based on the user input 67, outputting a second response 65 to the user utterance.

The outputting of the first response 63 may include outputting information regarding an entity or a combination of entities before the user utterance is terminated.

The outputting of the information may include outputting a list of items related to the entity and the combination of the entities.

The outputting of the information may include retrieving data associated with the entity or the combination of the entities from the memory 130, 207, 630 included in the electronic device 101, 201, or 501. The outputting of the information may include, based on the retrieved data, outputting information regarding the entity or the combination of the entities.

The first response 63 and the second response 65 may be output through a display of the electronic device 101, 201, or 501.

The outputting of the second response 65 may include, based on the first response 63, outputting one of a first UI and a second UI through the display. The first UI may include the second response. The second UI may include the first response and the second response.

The outputting through the display may include, based on a relationship between the first response 63 and the second response 65 or a form of the first response 63, outputting one of the first UI and the second UI through the display.

The electronic device according to various embodiments disclosed herein may be one of various types of electronic devices. The electronic device may include, for example, a portable communication device (e.g., a smartphone), a computer device, a portable multimedia device, a portable medical device, a camera, a wearable device, or a home appliance. According to an embodiment of the present disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms such as "1st" and "2nd," or "first" and "second" may be used to simply distinguish a corresponding component from another, and do not limit the components in other aspect (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., a program 1740) including one or more instructions that are stored in a storage medium (e.g., internal memory 1736 or external memory 1738) that is readable by a machine (e.g., an electronic device 1701) For example, a processor (e.g., a processor 1720) of the machine (e.g., the electronic device 1701) may invoke at least one of the one or more instructions stored in the storage medium and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where the data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read-only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

The effects to be achieved are not limited to those described above, and other effects not mentioned above will be clearly understood by one of ordinary skill in the art from this document.

## Claims

1. An electronic device (101, 201, 501) comprising:
at least one processor (120, 203, 620); and
memory (130, 207, 630) storing instructions,
wherein the instructions, when executed by the at least one processor (120, 203, 620) individually or collectively, cause the electronic device (101, 201, 501) to perform a plurality of operations,
wherein the plurality of operations comprises:
in response to obtaining a portion of a user utterance, outputting a first response (63) to the portion;
obtaining a user input (67) for the first response; and
in response to termination of the user utterance, based on the user input (67), outputting a second response (65) to the user utterance, and
wherein the outputting of the first response (63) comprises:
retrieving, from the memory (130, 207, 630), data associated with an entity comprised in the portion of the user utterance or a combination of entities comprised in the portion of the user utterance; and
based on the retrieved data, outputting a list of items related to the entity or the combination of the entities.

2. The electronic device (101, 201, 501) of claim 1, wherein the obtaining of the user input (67) comprises receiving a user selection for the list.

3. The electronic device (101, 201, 501) of one of claims 1 and 2, further comprising:
a display operatively connected to the processor (120, 203, 620),
wherein the first response (63) and the second response (65) are output through the display.

4. The electronic device (101, 201, 501) of one of claims 1 to 3, wherein the outputting of the second response (65) comprises, based on the first response (63), outputting one of a first user interface (UI) and a second UI through the display.

5. The electronic device (101, 201, 501) of one of claims 1 to 4, wherein
the first UI comprises the second response, and
the second UI comprises the first response and the second response.

6. The electronic device (101, 201, 501) of one of claims 1 to 5, wherein the outputting through the display comprises, based on a relationship between the first response (63) and the second response (65) or a form of the first response (63), outputting one of the first UI and the second UI through the display.

7. The electronic device (101, 201, 501) of one of claims 1 to 6, wherein the plurality of operations further comprises:
in response to obtaining an additional user input for the first response (63) after outputting the second response (65), outputting a third response (1207) based on the second response (65).

8. An electronic device (101, 201, 501) comprising:
at least one processor (120, 203, 620); and
memory (130, 207, 630) storing instructions,
wherein the instructions, when executed by the at least one processor (120, 203, 620) individually or collectively, cause the electronic device (101, 201, 501) to perform a plurality of operations, and
wherein the plurality of operations comprises:
before a user utterance is terminated, identifying an entity from a portion of the user utterance;
in response to the identification of the entity, obtaining, from a data source, data related to the entity; and
before the user utterance is terminated, based on the data, outputting information regarding the entity.

9. The electronic device (101, 201, 501) of claim 8, wherein the obtaining comprises extracting, from the data source, textual data related to the entity.

10. A method of operating an electronic device (101, 201, 501), the method comprising:
in response to obtaining a portion of a user utterance, outputting a first response (63) to the portion;
obtaining a user input (67) for the first response; and
in response to termination of the user utterance, based on the user input (67), outputting a second response (65) to the user utterance.

11. The method of claim 10, wherein the outputting of the first response (63) comprises outputting information regarding an entity or a combination of entities before the user utterance is terminated.

12. The method of one of claims 10 and 11, wherein the outputting of the information comprises outputting a list of items related to the entity and the combination of the entities.

13. The method of one of claims 10 to 12, wherein the outputting of the information comprises:
retrieving, from memory (130, 207, 630) comprised in the electronic device (101, 201, 501), data associated with the entity or the combination of the entities; and
based on the retrieved data, outputting information regarding the entity or the combination of the entities.

14. The method of one of claims 10 to 13, wherein the first response (63) and the second response (65) are output through a display of the electronic device (101, 201, 501).

15. The method of one of claims 10 to 14, wherein
the outputting of the second response (65) comprises, based on the first response (63), outputting one of a first user interface (UI) and a second UI through the display,
the first UI comprises the second response, and
the second UI comprises the first response and the second response.
